# DEMANDE DE BREVET EUROPEEN

(11) **EP 1 234 656 A1**
(43) Date de publication de la demande: **28.08.2002**
(21) Numéro de dépôt: 02290419.7
(22) Date de dépôt: 21.02.2002
(51) Int. Cl.: B29D 31/00, B60B 5/02

(54) **Roue, notamment pour vehicules legers, et son procede de fabrication**

(30) Priorité: 23.02.2001 FR 0102480
(71) Demandeur: M.J.F.I., 49290 Chalonnes sur Loire (FR)
(72) Inventeur: Bernier, Marc, 49290 Chalonnes sur Loire (FR)
(74) Mandataire: Laget, Jean-Loup

(57) **Abrégé**

L'invention concerne un procédé de fabrication d'une roue (1) obtenue par assemblage de deux demi-tores (2) organisés de part et d'autre du plan de symétrie de la roue (1).

Ce procédé est caractérisé en ce qu'avant assemblage des demi-tores (2) devant constituer une chambre (3) à air déformable, on surmoule sur une portion de chaque demi-tore (2) une portion de bande (4) de roulement puis on assemble les deux demi-tores (2) ainsi garnis de leur bande (4) de roulement au niveau du plan de symétrie de la roue par une liaison (5), de préférence étanche, pour permettre le montage de la bande (4) de roulement sans contrainte tout en conservant la déformabilité de la chambre (3) à air de la roue (1).

Application : roues de landaus-poussettes.

## Description

La présente invention concerne un procédé de fabrication d'une roue pour véhicules légers, ainsi que la roue obtenue par la mise en oeuvre du procédé.

Les roues du type obtenues par assemblage de deux demi-tores se sont généralisées ces dernières années, comme l'illustrent les brevets FR-A-2485445 et FR-A-2738188.

Dans le brevet FR-A-2485445, la roue décrite est constituée de deux demi-tores identiques assemblés puis revêtus, après assemblage, d'un revêtement thermoplastique constituant un bandage de roulement sur l'ensemble des deux flasques assemblés. Une telle succession des opérations pose un certain nombre d'inconvénients pour la réalisation de la bande de roulement. En effet, du fait que les demi-tores sont creux, l'application par surmoulage d'une bande de roulement à la surface des demi-tores, qui s'effectue généralement par injection à haute pression, peut générer des déformations irréversibles de la paroi constitutive du demi-tore, de sorte qu'il en résulte un endommagement irréversible de la roue. De ce fait, il est aujourd'hui en pratique impossible de réaliser par moulage par injection une roue comportant les étapes de fabrication décrites dans ce document. En effet, on ne connaît pas, aujourd'hui, d'éléments sous forme de demi-tores susceptibles de se prêter à l'application par pression sur ceux-ci d'un bandage, y compris dans le cas où la matière constitutive du demi-tore est choisie dans le groupe des matières particulièrement rigides. En général, lors de la mise en oeuvre d'un tel procédé, il est pratiqué un renforcement du demi-tore préalablement à la pose de la bande de roulement. Ce renforcement peut consister notamment en la réalisation de nervures à l'intérieur du demi-tore.

Pour pallier le problème précité, le brevet FR-A-2738188 propose d'assembler les demi-tores une fois chaque demi-tore muni de sa bande de roulement. Ces demi-tores sont obtenus par matriçage. Ces demi-tores sont ensuite assemblés par l'intermédiaire de chevilles et de manchons réalisés d'une seule pièce avec les demi-tores. Chevilles et manchons s'encastrent l'un dans l'autre pour un accouplement et un assemblage axial dans le plan médian de la jante résultante. Du fait de cet assemblage, tel que représenté à la figure 1 de ce document, toute déformation ultérieure de la roue, en fonction notamment des efforts exercés sur la roue, au cours de l'utilisation de cette dernière, est rendue impossible. Il en résulte une roue qui présente un bon comportement à l'usure, à l'adhérence et au bruit, mais qui ne permet en aucun cas d'amortir les chocs. En fonction des conditions de roulement, une telle roue est donc dans l'incapacité de se déformer proportionnellement à l'effort appliqué sur cette dernière, que cet effort résulte d'un effort de roulement ou d'un choc.

Le but de la présente invention est donc de proposer un procédé de fabrication d'une roue, constituant un perfectionnement des procédés précités, ce procédé permettant la conception d'une roue déformable proportionnellement à l'effort qui lui est appliqué, cette roue étant en outre non bruyante et résistante à l'usure du fait des caractéristiques de sa bande de roulement.

Un autre but de la présente invention est de proposer un procédé dont la conception permet de fabriquer une roue par moulage par injection au moyen d'un outillage pouvant se limiter à un moule constitué d'une partie mâle et d'un jeu de parties femelles.

Un autre but de la présente invention est de proposer une roue fabriquée par moulage par injection, cette roue étant constituée d'une chambre à air élastiquement déformable et revêtue d'une bande de roulement.

A cet effet l'invention a pour objet un procédé de fabrication d'une roue légère en matériau thermoplastique destinée notamment à équiper des véhicules légers tels que les chariots de manutention, les landaus ou poussettes, les jouets, ou tout autre véhicule de ce genre, la roue étant obtenue par assemblage de deux demi-tores organisés de part et d'autre du plan de symétrie de la roue, caractérisé en ce qu'avant assemblage des demi-tores devant constituer une chambre à air déformable, on surmoule, sur une portion de chaque demi-tore, une portion de bande de roulement puis on assemble les deux demi-tores ainsi garnis de leur bande de roulement au niveau du plan de symétrie de la roue par une liaison, de préférence étanche, pour permettre le montage de la bande de roulement sans contrainte tout en conservant la déformabilité de la chambre à air de la roue.

L'invention a encore pour objet une roue légère en matériau thermoplastique destinée notamment à équiper des véhicules légers, cette roue obtenue par assemblage de deux demi-tores étant caractérisée par le fait que chaque demi-tore est obtenu par la mise en oeuvre du procédé précité.

L'invention sera bien comprise à la lecture de la description suivante d'exemples de réalisation, en référence aux dessins annexés dans lesquels :

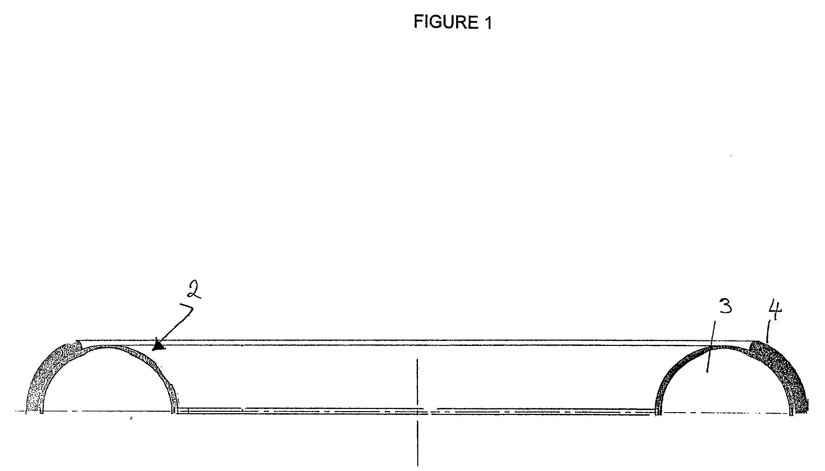

la figure 1 représente une vue en coupe d'un demi-tore garni de sa bande de roulement avant assemblage et
la figure 2 représente une vue en coupe d'une roue à l'état assemblé des demi-tores, avec un détail de paroi de roue.

Comme mentionné ci-dessus le procédé de fabrication, objet de l'invention, permet l'obtention d'une roue qui peut être considérée comme une roue à pneumatique constituée de deux demi-tores assemblés l'un à l'autre par le plan diamétral du tore pour former, à l'état assemblé, une roue susceptible d'être accouplée ou réalisée monobloc avec une jante.

Une telle roue, généralement fabriquée en matière thermoplastique, est destinée à équiper notamment des véhicules légers tels que des chariots de manutention, des landaus ou des poussettes.

De manière caractéristique à l'invention, on surmoule, sur une portion de chaque demi-tore 2, une portion de bande 4 de roulement, avant assemblage des deux demi-tores 2 ainsi garnis de leur bande de roulement. L'application d'une bande 4 de roulement sur chaque demi-tore avant assemblage des deux demi-tores permet d'appliquer tout type de bande de roulement sans aucune contrainte. Généralement, l'application de cette bande 4 de roulement s'effectue alors que le demi-tore est encore soutenu par la partie mâle de moule. Ainsi, seule la partie femelle est modifiée pour permettre le surmoulage de la bande 4 de roulement. Les deux demi-tores sont ensuite assemblés au niveau du plan de symétrie de la roue par une liaison 5, de préférence étanche. Le positionnement de la liaison 5 au niveau du plan de symétrie de la roue permet d'obtenir, à l'état assemblé des deux demi-tores, une roue à chambre 3 à air déformable en fonction de l'effort qui est appliqué à la roue. En effet, aucun élément de liaison des roues n'empêche une déformation axiale de ladite roue. La liaison 5 des deux demi-tores peut affecter un grand nombre de formes de réalisation. Généralement on relie les deux demi-tores 2 par une soudure, telle qu'une soudure ultrason, une soudure par vibration ou une soudure miroir.

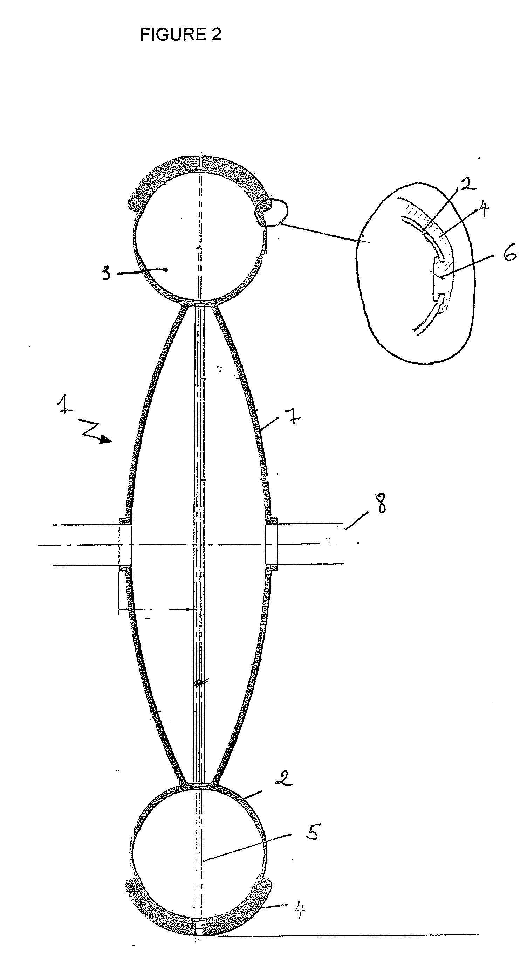

Il est à noter que chaque demi-tore 2 destiné à être garni d'une bande 4 de roulement puis assemblé par une liaison 5, de préférence étanche, peut être réalisé sous forme d'un ensemble monolithique ou être constitué de plusieurs parties liées entre elles notamment par au moins une zone élastiquement déformable pouvant affecter la forme d'une bande 6 comme l'illustre la vue de détail représentée à la figure 2. Cette bande 6 forme, dans ce cas particulier, à l'état assemblé des demi-tores 2, un anneau sphérique. Cette bande 6 peut être réalisée en un matériau identique ou non à celui constituant la bande 4 de roulement. Dans une variante de réalisation, cette zone 6 élastiquement déformable de chaque demi-tore peut être constituée simplement par un amincissement de la matière constitutive du tore.

Comme mentionné ci-dessus, la bande 4 de roulement peut affecter un grand nombre de formes. Ainsi, on peut immobiliser la bande 4 de roulement surmoulée à la surface de la chambre 3 à air par des moyens d'ancrage tels que des perforations ménagées dans ladite chambre à air et à l'intérieur desquelles pénètre la matière de moulage.

La bande 4 de roulement participe ainsi à la déformation de la chambre 3 à air de la roue. Cette chambre 3 à air de la roue peut être une chambre gonflable ou non. Ainsi, il est possible d'introduire, avant assemblage des deux demi-tores 2, une poudre gazogène dans ladite chambre 3. On décompose ensuite, généralement par élévation de la température après assemblage des deux demi-tores 2, la poudre pour assurer un gonflage de la chambre 3. La roue 1 obtenue par un tel procédé de fabrication peut affecter un grand nombre de formes. Dans les exemples représentés, chaque demi-tore 2 est relié à une voile 7 circulaire présentant en son centre un passage 8 pour un axe de roue. Dans les exemples représentés, les demi-tores et le voile 7 forment un ensemble monolithique.

Généralement, la portion de tore 2 constitutive de la chambre 3 à air de la roue est réalisée en un matériau choisi dans le groupe constitué de résines injectables ou moulables, telles que le polypropylène et le polyamide.

La bande 4 de roulement de la roue est quant à elle constituée de thermoplastique élastomère souple.

La roue ainsi obtenue par le procédé précité dispose de l'ensemble des propriétés de roulement et de résistance à l'usure obtenues sur une roue à pneumatique tout en étant obtenue par un procédé de moulage par injection dont les étapes de mise en oeuvre sont particulièrement simples.

L'utilisation d'un procédé de fabrication comportant des étapes d'injection de matière permet à volonté d'utiliser des matières de différentes couleurs pour conférer à la roue un aspect esthétique intéressant à l'égard de l'utilisateur.

De la même manière il est possible de combiner les différentes matières aux propriétés différentes pour obtenir des roues dont les caractéristiques techniques sont multiples.

## Revendications

1. Procédé de fabrication d'une roue (1) légère en matériau thermoplastique, destinée à équiper notamment des véhicules légers tels que les chariots de manutention, les landaus ou poussettes, les jouets, ou tout autre véhicule de ce genre, la roue (1), étant obtenue par assemblage de deux demi-tores (2) organisés de part et d'autre du plan de symétrie de la roue (1),
**caractérisé en ce qu'**avant assemblage des demi-tores (2) devant constituer une chambre (3) à air déformable, on surmoule sur une portion de chaque demi-tore (2) une portion de bande (4) de roulement puis on assemble les deux demi-tores (2) ainsi garnis de leur bande (4) de roulement au niveau du plan de symétrie de la roue par une liaison (5), de préférence étanche, pour permettre le montage de la bande (4) de roulement sans contrainte tout en conservant la déformabilité de la chambre (3) à air de la roue (1).

2. Procédé de fabrication d'une roue (1) selon la revendication 1,
**caractérisé en ce qu'**on relie les demi-tores (2) par une soudure, telle qu'une soudure ultrason, une soudure par vibration ou une soudure miroir.

3. Procédé de fabrication d'une roue (1) selon l'une des revendications 1 et 2,
**caractérisé en ce qu'**on immobilise la bande (4) de roulement, surmoulée à la surface de la chambre (3) à air, par des moyens d'ancrage tels que des perforations (6), ménagés dans ladite chambre (3) à air et à l'intérieur desquels pénètre la matière de moulage.

4. Procédé de fabrication d'une roue (1) selon l'une des revendications 1 à 3,
**caractérisé en ce qu'**on introduit, avant assemblage des demi-tores (2), une poudre gazogène dans ladite chambre (3) et **en ce qu'**on décompose, généralement par élévation de la température, après assemblage des demi-tores (2), ladite poudre pour assurer un gonflage de la chambre (3).

5. Roue (1) légère en matériau thermoplastique destinée à équiper notamment des véhicules légers, cette roue (1) étant obtenue par assemblage de deux demi-tores (2),
**caractérisée en ce que** chaque demi-tore (2) est obtenu par la mise en oeuvre du procédé conforme à l'une des revendications 1 à 4.

6. Roue (1) selon la revendication 5,
**caractérisée en ce que** chaque demi-tore (2) est relié à un voile (7) circulaire présentant en son centre un passage (8) pour un axe de roue.

7. Roue (1) selon l'une des revendications 5 et 6,
**caractérisée en ce que** chaque demi-tore (2) est constitué de plusieurs parties liées entre elles par au moins une zone (6) élastiquement déformable.

8. Roue (1) selon l'une des revendications 5 à 7,
**caractérisée en ce que** la portion de tore (2) constitutive de la chambre (3) à air de la roue est réalisée en un matériau choisi dans le groupe constitué de résines injectables ou moulables telles que le polypropylène et le polyamide.

9. Roue (1) selon l'une des revendications 5 à 8,
**caractérisée en ce que** la bande (4) de roulement de la roue est constituée de thermoplastique élastomère souple.
